# EUROPEAN PATENT APPLICATION

(11) **EP 4 617 049 A1**
(43) Date of publication of application: **17.09.2025**
(21) Application number: 23888339.1
(22) Date of filing: 14.09.2023
(51) Int. Cl.: B30B 11/00, B29C 43/24, B29C 43/46, B30B 3/00, B30B 9/28, B30B 15/08, H01M 4/04, H01M 4/139

(54) **GREEN COMPACT MOLDING DEVICE AND GREEN COMPACT MOLDING METHOD**

(30) Priority: 11.11.2022 JP 2022180768
(71) Applicant: Panasonic Intellectual Property Management Co., Ltd., Kadoma-shi, Osaka 571-0057 (JP)
(72) Inventor: TAKAYAMA Yosuke, Osaka 571-0057 (JP); KOTANI Norihiro, Osaka 571-0057 (JP); MAEDA Satoru, Osaka 571-0057 (JP)
(74) Representative: Eisenführ Speiser
(86) International application number: PCT/JP2023/033502
(87) International publication number: WO 2024/100985

(57) **Abstract**

This green compact molding device 1 comprises: a roll stretching mechanism 2 in which three or more stretching rolls 6 are lined up, the roll stretching mechanism 2 stretching a green compact 8, in which a powder P is compressed into the form of a sheet, at two or more locations; and a plurality of cutting mechanisms 4 that are provided to two or more of the stretching rolls 6, which are for supporting and conveying the stretched green compact 8 on peripheral surfaces, the plurality of cutting mechanisms 4 cutting width-direction end sections of the green compact 8 that is supported by the stretching rolls 6.

## Description

### TECHNICAL FIELD

The present disclosure relates to a compact molding apparatus and a compact molding method.

### BACKGROUND ART

Patent Literature 1 describes a technique for supplying a powder (granule) to a gap between a pair of rolls and compressing the powder to obtain a sheet-like compact.

### RELATED-ART LITERATURE

### PATENT LITERATURE

Patent Literature 1: JP 2018-186033

### SUMMARY OF INVENTION

### TECHNICAL PROBLEM

There are cases in which a sheet-like compact supported by a plurality of rolls is conveyed, and the compact is gradually stretched during conveyance to adjust the thickness of the compact to a target value. In the process like this for stretching the compact, a crack at an end of the compact in the width direction, i.e., a so-called cracked edge, may be created. A cracked edge itself can cause deterioration in the quality of the compact. In addition, a cracked edge can cause the compact to be peeled from the circumferential surface of the roll or hinder transfer of the compact to the downstream roll. In addition, a portion of the compact peeled from the roll may be broken and stacked on one on another, for example. Therefore, a cracked edge created makes it difficult to perform the process of stretching the compact and can cause deterioration in the quality of the compact.

The present disclosure addresses the issue described above, and a purpose thereof is to provide a technology for improving the quality of a compact.

### SOLUTION TO PROBLEM

An embodiment of the present disclosure relates to a compact molding apparatus. The apparatus includes: a roll stretching mechanism in which three or more stretching rolls are arranged and which stretches a compact, produced by compressing a powder into a sheet shape, at two or more locations; and a plurality of cutting mechanisms that are provided in two or more of the stretching rolls supporting and conveying the compact, as stretched, on a circumferential surface and that cut an end of the compact, supported by the stretching roll, in a width direction.

Another embodiment of the present disclosure relates to a compact molding method. The method includes: stretching a compact, produced by compressing a powder into a sheet shape, in two or more stages by a roll stretching mechanism in which three or more stretching rolls are arranged; and cutting an end of the compact in a width direction on a circumferential surface of two or more of the stretching rolls.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the quality of the compact can be improved.

### BRIEF DESCRIPTION OF DRAWINGS

[Fig. 1] Fig. 1 is a schematic diagram of a compact molding apparatus according to the embodiment.
[Fig. 2] Figs. 2A, 2B and 2C are schematic diagrams for illustrating the cutting mechanism.

### DESCRIPTION OF EMBODIMENTS

Hereinafter, the present disclosure will be described based on preferred embodiments with reference to the accompanying drawings. The embodiments are not intended to limit the scope of the present disclosure but exemplify the present disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

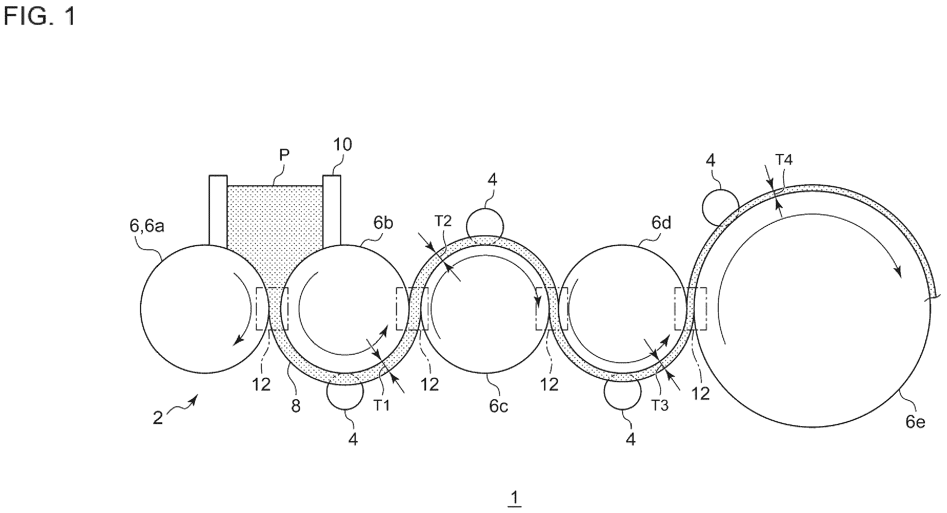

Fig. 1 is a schematic diagram of a compact molding apparatus 1 according to the embodiment. The compact molding apparatus 1 includes a roll stretching mechanism 2 and a plurality of cutting mechanisms 4.

The roll stretching mechanism 2 has three or more stretching rolls 6 and stretches the compact at two or more locations while conveying the compact 8. The roll stretching mechanism 2 of this embodiment has five stretching rolls 6 by way of example. Hereinafter, it is assumed that the first stretching roll 6a, the second stretching roll 6b, the third stretching roll 6c, the fourth stretching roll 6d, and the fifth stretching roll 6e are arranged in the stated order from the upstream side in the conveyance direction of the compact 8. Each stretching roll 6 is oriented such that the rotation axes are parallel to each other and are lined up at predetermined intervals in the conveying direction of the compact 8.

Therefore, the circumferential surface of the first stretching roll 6a and the circumferential surface of the second stretching roll 6b face each other. Further, the circumferential surface of the second stretching roll 6b and the circumferential surface of the third stretching roll 6c face each other. Further, the circumferential surface of the third stretching roll 6c and the circumferential surface of the fourth stretching roll 6d face each other. Further, the circumferential surface of the fourth stretching roll 6d and the circumferential surface of the fifth stretching roll 6e face each other. The first stretching roll 6a-the fourth stretching roll 6d have the same diameter, and the fifth stretching roll 6e has a larger diameter than the other stretching rolls 6. The number of stretching rolls 6 is not particularly limited as long as it is 3 or more. Further, the diameter of each stretching roll 6 can be changed as appropriate.

By way of example, a reservoir 10 is disposed between the first stretching roll 6a and the second stretching roll 6b. The reservoir 10 has, for example, a known structure such as a combination of a hopper and a feeder and stores a powder P that serves as a raw material for the compact 8. The powder P constituting the compact 8 contains predetermined particles and, if necessary, a binding component. The binding component includes at least one of a known binder or a solvent. For example, the powder P is a dry electrode compound, and the compact 8 is an electrode compound sheet.

The dry electrode compound includes an electrode active material and, if necessary, a conductive agent, a binder, and a solvent. In the case of a general lithium ion secondary battery, the electrode active material is lithium cobalt oxide, lithium iron phosphate, etc. in the case of a positive electrode and is graphite etc. in the case of a negative electrode. The conductive agent is graphite, carbon black, acetylene black, etc. The binder is polytetrafluoroethylene (PTFE), polyvinylidene fluoride (PVdF), etc. In the case the dry electrode compound is used for the negative electrode, the solvent is exemplified by water; alcohols such as ethanol; N-methylpyrrolidone (NMP); toluene; dimethyl carbonate (DMC), ethyl methylcarbonate (EMC), etc. In the case the dry electrode compound is used for the positive electrode, the solvent is exemplified by amine-based solvent such as N, N-dimethylaminopropylamine, diethylenetriamine, etc.; ether-based solvent such as tetrahydrofuran; ketone-based solvent such as methyl ethyl ketone; ester-based solvent such as methyl acetate; amide solvent such as dimethylacetamide and N-methyl-2-pyrrolidone, etc.

The binding component content of the dry electrode compound is 10% by mass or less, or 5% by mass or less, or 3% by mass or less, or 0.1% by mass, or substantially 0% with respect to the total mass of the dry electrode compound. In the case the dry electrode compound is used, a drying furnace for drying the compact 8 can be omitted. The powder P may be a wet powder having a binding component content higher than 10% by mass. Further, the usage of the compact 8 is not particularly limited, and the powder P may be a powder other than the dry electrode compound.

The first stretching roll 6a and the second stretching roll 6b are disposed at the powder outlet of the reservoir 10. The first stretching roll 6a and the second stretching roll 6b by way of example also function as feed rolls of the feeder and supply the powder P in the reservoir 10 to the gap between the two stretching rolls, placing the powder P on the circumferential surface of the first stretching roll 6a and the circumferential surface of the second stretching roll 6b.

The first stretching roll 6a and the second stretching roll 6b rotate in mutually opposite directions to compress the powder P supplied to the gap into a sheet shape. Thereby, the compact 8 is formed. The compact 8 is continuously fed from the gap between the first stretching roll 6a and the second stretching roll 6b. Therefore, the compact 8 is a strip elongated in the conveying direction. The compact 8 is conveyed to the downstream side while being supported on the circumferential surface of the second stretching roll 6b. The compact 8 that is compression-molded by a known extruder, etc. into a sheet shape in advance may be supplied to a space between the first stretching roll 6a and the second stretching roll 6b. The compact 8 supported and conveyed on the circumferential surface of the second stretching roll 6b is delivered to the side of the third stretching roll 6c at a position where the second stretching roll 6b and the third stretching roll 6c face each other. The second stretching roll 6b and the third stretching roll 6c rotate in mutually opposite directions to send the compact 8 downstream. The compact 8 is supported and conveyed on the circumferential surface of the third stretching roll 6c and is delivered to the side of the fourth stretching roll 6d at a position where the third stretching roll 6c and the fourth stretching roll 6d face each other.

The third stretching roll 6c and the fourth stretching roll 6d rotate in mutually opposite directions to send the compact 8 downstream. The compact 8 is supported and conveyed on the circumferential surface of the fourth stretching roll 6d and is delivered to the fifth stretching roll 6e at a position where the fourth stretching roll 6d and the fifth stretching roll 6e face each other. The fourth stretching roll 6d and the fifth stretching roll 6e rotate in mutually opposite directions to send the compact 8 downstream. The compact 8 is supported and conveyed on the circumferential surface of the fifth stretching roll 6e and subjected to the next processing step. The compact 8 being stretched and conveyed is maintained in contact with the circumferential surface of the second stretching roll 6b-the fifth stretching roll 6e.

The compact 8 passing between two adjacent stretching rolls 6 is stretched by at least one of pressurization by the two stretching rolls 6 or by a circumferential velocity difference between the two stretching rolls 6. In the roll stretching mechanism 2 of this embodiment, the compact 8 is stretched as it passes between the first stretching roll 6a and the second stretching roll 6b, between the second stretching roll 6b and the third stretching roll 6c, between the third stretching roll 6c and the fourth stretching roll 6d, and between the fourth stretching roll 6d and the fifth stretching roll 6e. That is, the roll stretching mechanism 2 has four stretching parts 12. Each stretching part 12 is comprised of two circumferential surfaces of two adjacent stretching rolls 6 facing each other.

Therefore, the thickness T2 of the compact 8 located on the circumferential surface of the third stretching roll 6c is smaller than the thickness T1 of the compact 8 located on the circumferential surface of the second stretching roll 6b. Further, the thickness T3 of the compact 8 located on the circumferential surface of the fourth stretching roll 6d is smaller than the thickness T2 of the compact 8 located on the circumferential surface of the third stretching roll 6c. Further, the thickness T4 of the compact 8 located on the circumferential surface of the fifth stretching roll 6e is smaller than the thickness T3 of the compact 8 located on the circumferential surface of the fourth stretching roll 6d. The thickness of the compact 8 is, for example, 100-2000 µm before the stretching process is performed and is reduced by the roll stretching mechanism 2 to 50-200 µm.

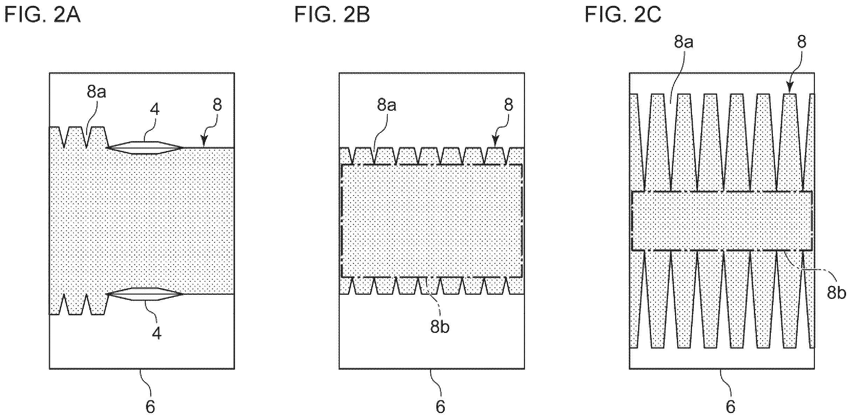

The cutting mechanism 4 is provided for two or more of the stretching rolls 6 that support and convey the stretched compact 8 on the circumferential surface. In this embodiment, the cutting mechanism 4 is provided for the second stretching roll 6b-the fifth stretching roll 6e. The first stretching roll 6a does not support the compact 8 on the circumferential surface and so is not provided with the cutting mechanism 4. Figs. 2A-2C are schematic diagrams for illustrating the cutting mechanism 4. Figs. 2A-2C show views of the stretching roll 6 in a direction normal to the circumferential surface of the stretching roll 6. Further, Figs. 2A and 2B show a state of the compact 8 cut at the ends. Meanwhile, Fig. 2C shows a state of the compact 8 not cut at the ends.

When the compact 8 is stretched by the stretching roll 6, a so-called cracked edge 8a may be created at the end of the compact 8 in the width direction. The width direction of the compact 8 is a direction on the circumferential surface of each stretching roll 6 perpendicular to the conveying direction of the compact 8, i.e., a direction parallel to the rotation axis of the stretching roll 6. When the cracked edge 8a is created, the end of the compact 8 is easily peeled from the circumferential surface of the stretching roll 6. When the compact 8 with the peeled end advances to the stretching part 12, the peeled end can be compressed in a bent state, causing the thickness of the compact 8 to become uneven. Further, there is a risk that the compact 8 cannot pass the stretching part 12, and conveyance stops.

To address this issue, the compact molding apparatus 1 includes a plurality of cutting mechanisms 4. The compact molding apparatus 1 of this embodiment includes four cutting mechanisms 4. Further, the cutting mechanism 4 is provided one each for the second stretching roll 6b-the fifth stretching roll 6e. The cutting mechanism 4 provided in each stretching roll 6 is downstream of the stretching part 12 formed by the circumferential surface of a given stretching roll 6 and the circumferential surface of the stretching roll 6 upstream of the given stretching roll 6, and the cutting mechanism 4 is arranged to face the circumference surface of the given stretching roll 6. Each cutting mechanism 4 cuts the end of the compact 8 supported by each stretching roll 6 in the width direction. The cutting mechanism 4 by way of example includes, as shown in Fig. 2A, a pair of disk cutters arranged at predetermined intervals in the width direction of the compact 8. Each disk cutter is pressed against the circumferential surface of the stretching roll 6 by an air cylinder (not shown), etc. Further, the interval between the pair of disk cutters in the width direction can be automatically adjusted by a combination of a displacement mechanism and a camera, etc. (not shown) according to the length of the cracked edge 8a in the width direction. Alternatively, the interval can be manually adjusted by the operator of the compact molding apparatus 1.

The end of the compact 8 in the width direction can be cut according to the rotation of the disk cutter of the cutting mechanism 4 in synchronization with the rotation of the stretching roll 6. The cut end is peeled from the circumferential surface of the stretching roll 6 and is removed from the circumferential surface of the stretching roll 6. Peeling may be assisted by a peeling mechanism, etc. (not shown). Preferably, the end of the compact 8 removed is sent to the reservoir 10, etc. for recycling. This can reduce the amount of the powder P discarded.

By cutting the end of the compact 8 in each of the second stretching roll 6b-the fifth stretching roll 6e, the compact 8 not having the cracked edge 8a can be supplied to each stretching part 12 or to the next processing step.

Accordingly, the quality of the compact 8 can be improved. Further, when the compact 8 in which the cracked edge 8a created in the upstream stretching part 12 remains is stretched by the downstream stretching part 12, the cracked edge 8a can grow so that an effective region 8b can be reduced as shown in Fig. 2C. The effective region 8b is an area that can be used as, for example, a product. This is addressed by removing the cracked edge 8a each time compact 8 passes the stretching part 12 to secure the area of the effective region 8b as shown in Fig. 2B even if the cracked edge 8a is created again due to stretching in the downstream stretching part 12.

Further, the total amount of the compact 8 removed throughout the roll stretching mechanism 2 can be reduced by removing the end of the compact 8 each time it passes the stretching part 12. The present inventors have prepared a compact molding apparatus according to a comparative example, in which the cutting mechanism 4 is provided only in the most downstream third stretching roll 6c in the roll stretching mechanism 2 including the first stretching roll 6a-the third stretching roll 6c, and also prepared the compact molding apparatus according to the embodiment, in which the cutting mechanism 4 is provided in the midstream second stretching roll 6b in addition to the most downstream third stretching roll 6c. The step of stretching the compact 8 was performed by the compact molding apparatuses of the comparative example and of the embodiment under the same conditions except for the number of stretching rolls 6.

In both the comparative example and the embodiment, the compact 8 on the circumferential surface of the second stretching roll 6b had the cracked edge 8a having a length of 2 mm in the width direction at both ends. That is, the 2 mm cracked edges 8a were created at both ends due to stretching by the first stretching roll 6a and the second stretching roll 6b. Further, the second stretching roll 6b does not have the cutting mechanism 4 in the comparative example so that stretching by the second stretching roll 6b and the third stretching roll 6c was performed without the cracked edge 8a being removed. As a result, the compact 8 on the circumferential surface of the third stretching roll 6c had the 7 mm cracked edge 8a at both ends. That is, the cracked edge 8a grew from 2 mm to 7 mm due to rolling by the second stretching roll 6b and the third stretching roll 6c. Therefore, both ends of the compact 8 were removed by 7 mm on the circumferential surface of the third stretching roll 6c. Therefore, the total width of the compact 8 removed in the comparative example was 14 mm.

In the embodiment, on the other hand, the second stretching roll 6b has the cutting mechanism 4 so that both ends of the compact 8 were removed by 2 mm on the circumferential surface of the second stretching roll 6b before the compact 8 was stretched by the second stretching roll 6b and the third stretching roll 6c. As a result, the compact 8 on the circumferential surface of the third stretching roll 6c had the 2 mm cracked edge 8a at both ends. Therefore, both ends of the compact 8 were removed by 2 mm on the circumferential surface of the third stretching roll 6c. Accordingly, the total width of the compact 8 removed in the embodiment was 8 mm.

As discussed above, it has been confirmed that the amount of the compact 8 removed throughout the entire roll stretching mechanism 2 can be reduced by removing the end of the compact 8 each time it passes the stretching part 12. Further, bulging of the compact 8 was observed on the circumferential surface of the third stretching roll 6c in the comparative example. In the embodiment, on the other hand, no bulging of the compact 8 was observed on the circumferential surface of the third stretching roll 6c. It was therefore confirmed that quality deterioration in the compact 8 due to the cracked edge 8a can be suppressed by removing the end of the compact 8 each time it passed the stretching part 12.

In this embodiment, the cutting mechanism 4 is provided in all stretching rolls 6 except for the most upstream first stretching roll 6a. This can suppress quality deterioration in the compact 8 due to the cracked edge 8a more reliably. The embodiment is not particularly limited to this configuration, and the cutting mechanism 4 may be provided only in some of the stretching rolls 6 according to the ease of creation and ease of growth of the cracked edge 8a. That is, creation and growth of the cracked edge 8a can be suppressed and the quality of the compact 8 can be improved by providing the cutting mechanism 4 at two or more locations in the roll stretching mechanism 2 having 2 or more stretching parts 12 and configured to stretch the compact 8 in two or more stages. Further, providing the cutting mechanism 4 only in some of the stretching rolls 6 makes it possible to simplify the structure and reduce the cost of the compact molding apparatus 1.

In the case the cutting mechanism 4 is provided only in some of the stretching rolls 6, the cutting mechanism 4 is preferably provided in the stretching roll 6 located on the most downstream side in the conveying direction of the compact 8. In this embodiment, the cutting mechanism 4 is provided in the fifth stretching roll 6e. This makes it possible to prevent the cracked edge 8a from remaining in the compact 8 after the stretching process is completed more successfully than otherwise.

Further, the cutting mechanism 4 is preferably provided in at least one of the stretching rolls 6 that support the compact 8 at a portion in the circumferential surface facing downward in the vertical direction. In this embodiment, the second stretching roll 6b and the fourth stretching roll 6d support the compact 8 at a portion facing downward in the vertical direction. In the case the cutting mechanism 4 is provided in the second stretching roll 6b and the fourth stretching roll 6d, the end of the compact 8 cut by the cutting mechanism 4 can be easily removed from the circumferential surface of each stretching roll 6 by using gravity. That is, when the end of the compact 8 is removed on the circumferential surface facing downward in the vertical direction, the end falls under its own weight so that removal from the circumferential surface is automatically completed. It is therefore not necessary to separately provide a mechanism for removing the end from the circumferential surface.

Further, the roll stretching mechanism 2 by way of example has a pair of stretching rolls 6 in which the circumferential velocity of the downstream stretching roll 6 is equal to or more than twice the circumferential velocity of the upstream stretching roll 6. In this case, the cutting mechanism 4 is preferably provided in the downstream stretching roll 6. Configuring the circumferential velocity difference between a pair of stretching rolls 6 to differ by a factor of 2 or more makes it possible to make the compact 8 to be thinner more efficiently than otherwise. Consequently, the number of necessary stretching parts 12 can be reduced, and the size and cost of the roll stretching mechanism 2 and, ultimately, the compact molding apparatus 1, can be reduced. Meanwhile, configuring the circumferential velocity difference between a pair of stretching rolls 6 to differ by a factor of 2 or more makes it easier for the cracked edges 8a to be created in the compact 8. In the case the roll stretching mechanism 2 has a pair of stretching rolls 6 with a high circumferential velocity ratio, therefore, quality deterioration in the compact 8 due to the cracked edge 8a can be suppressed more reliably than otherwise by providing the cutting mechanism 4 in the downstream stretching roll 6.

The compact 8 subjected to the stretching process by the roll stretching mechanism 2 can be laminated on a further sheet member such as a substrate. For example, a lamination roll conveying a further sheet member is provided at a position facing the fifth stretching roll 6e, and the compact 8 is laminated on the sheet member supported by the circumferential surface of the lamination roll. Given that the compact 8 is an electrode compound sheet, for example, the sheet member is a current collector plate.

As described above, the compact molding apparatus 1 according to this embodiment includes a roll stretching mechanism 2 in which three or more stretching rolls 6 are arranged and which has two or more stretching parts 12. The compact molding apparatus 1 also includes a plurality of cutting mechanisms 4 provided in two or more stretching rolls 6 and configured to cut the end of the compact 8 in the width direction. This makes it possible to suppress quality deterioration in the compact 8 due to the cracked edge 8a. In the case the powder P is a dry powder, in particular, the cracked edge 8a can be created more easily than in the case where the powder P is a wet powder. Therefore, the compact molding apparatus 1 of this embodiment can achieve a particularly effective function in the case the powder P is a dry powder.

Embodiments of the present disclosure have been described above in detail. The embodiments described above are merely specific examples of practicing the present disclosure. The details of the embodiment shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiments by using phrases such as "of this embodiment" and "in this embodiment", details not referred to as such are also subject to design modification. Any combination of constituting elements included in the embodiment is also useful as an embodiment of the present disclosure. Hatching in the cross section in the drawings should not be construed as limiting the material of the hatched object.

The embodiments may be defined by the following items.

### [Item 1]

A compact molding apparatus (1) including: a roll stretching mechanism (2) in which three or more stretching rolls (6, 6a, 6b, 6c, 6d, 6e) are arranged and which stretches a compact (8), produced by compressing a powder (P) into a sheet shape, at two or more locations; and a plurality of cutting mechanisms (4) that are provided in two or more of the stretching rolls (6b-6e) supporting and conveying the compact (8), as stretched, on a circumferential surface and that cut an end of the compact (8), supported by the stretching roll (6b-6e), in a width direction.

### [Item 2]

The compact molding apparatus (1) according to Item 1, wherein the cutting mechanism (4) is provided in the stretching roll (6e) located most downstream in a conveying direction of the compact (8).

### [Item 3]

The compact molding apparatus (1) according to Item 1 or Item 2, wherein the cutting mechanism (4) is provided in at least one of the stretching rolls (6b, 6d) supporting the compact (8) at a portion in the circumferential surface facing downward in a vertical direction.

### [Item 4]

The compact molding apparatus (1) according to Item 1 through Item 3, wherein the roll stretching mechanism (2) includes a pair of the stretching rolls (6), circumferential surfaces of the pair of the stretching rolls (6) facing each other, and a circumferential velocity of the stretching roll (6) on a downstream side being equal to or more than twice a circumferential velocity of the stretching roll (6) on an upstream side, and wherein the cutting mechanism (4) is provided in the stretching roll (6) on the downstream side.

### [Item 5]

A compact molding method including: stretching a compact (8), produced by compressing a powder (P) into a sheet shape, in two or more stages by a roll stretching mechanism (2) in which three or more stretching rolls (6) are arranged; and cutting an end of the compact (8) in a width direction on a circumferential surface of two or more of the stretching rolls (6).

### INDUSTRIAL APPLICABILITY

The present disclosure is applicable to a compact molding apparatus and a compact molding method.

### REFERENCE SIGNS LIST

1 compact molding apparatus, 2 roll stretching mechanism, 4 cutting mechanism, 6 stretching roll, 8 compact, 8a cracked edge, 12 stretching part, P powder

## Claims

1. A compact molding apparatus comprising:
a roll stretching mechanism in which three or more stretching rolls are arranged and which stretches a compact, produced by compressing a powder into a sheet shape, at two or more locations; and
a plurality of cutting mechanisms that are provided in two or more of the stretching rolls supporting and conveying the compact, as stretched, on a circumferential surface and that cut an end of the compact, supported by the stretching roll, in a width direction.

2. The compact molding apparatus according to Claim 1,
wherein the cutting mechanism is provided in the stretching roll located most downstream in a conveying direction of the compact.

3. The compact molding apparatus according to Claim 1 or **2,**
wherein the cutting mechanism is provided in at least one of the stretching rolls supporting the compact at a portion in the circumferential surface facing downward in a vertical direction.

4. The compact molding apparatus according to Claim 1 or 2,
wherein the roll stretching mechanism includes a pair of the stretching rolls, circumferential surfaces of the pair of the stretching rolls facing each other, and a circumferential velocity of the stretching roll on a downstream side being equal to or more than twice a circumferential velocity of the stretching roll on an upstream side, and
wherein the cutting mechanism is provided in the stretching roll on the downstream side.

5. A compact molding method comprising:
stretching a compact, produced by compressing a powder into a sheet shape, in two or more stages by a roll stretching mechanism in which three or more stretching rolls are arranged; and
cutting an end of the compact in a width direction on a circumferential surface of two or more of the stretching rolls.
